# EUROPÄISCHE PATENTANMELDUNG

(11) **EP 0 698 996 A2**
(43) Veröffentlichungstag der Anmeldung: **28.02.1996**
(21) Anmeldenummer: 95112757.0
(22) Anmeldetag: 14.08.1995
(51) Int. Cl.: H04N 5/44

(54) **Fernsehempfänger**

(30) Priorität: 23.08.1994 DE 4429872
(71) Anmelder: DEUTSCHE THOMSON-BRANDT GMBH, D-78048 Villingen-Schwenningen (DE)
(72) Erfinder: Pieper, Michael, D-30171 Hannover (DE); Riemann, Uwe, D-38124 Braunschweig (DE); Hütter, Ingo, D-29223 Celle (DE)

(57) **Zusammenfassung**

Ein Fernsehempfänger ist zum wahlweisen Empfang eines üblichen 4:3 Fersehsignals oder eines 16:9 PAlplus Signals geeignet. In der Zeile 23 werden Kennbits übertragen, die unter anderem anzeigen, ob ein PALplus-Signal mit Helpersignal übertragen wird und ob es sich um ein Kamerasignal oder einen Film handelt.

Aufgabe ist es, für einen derartigen PALplus-Fernsehempfänger ein neuartiges Anzeige-feature zu schaffen, das dem Bedienenden zusätzlich wertvolle Informationen beim Betrieb des Empfängers vermittelt.

An dem Empfänger ist ein sichtbares Anzeigemittel (5) für den Empfang eines PALplus-Signales vorgesehen. Vorzugsweise sind zwei Leuchtdioden (LED1, LED2) vorgesehen, von denen die eine den Empfang eine PALplus-Signals und die andere die Ausstrahlung eines Spielfilmes anzeigt.

Insbesondere für einen PALplus-Fernsehempfänger

## Beschreibung

Die Erfindung geht aus von einem Fernsehempfänger gemäß dem Oberbegriff des Anspruchs 1.

Es ist bekannt, in der ersten Hälfte der Zeile 23 zusätzlich Kennbits zu übertragen, die verschiedene Statusfunktionen des Signals anzeigen. Diese Bits zeigen unter anderem an, ob ein 4:3 oder ein 16:9 Bild ausgestrahlt wird, ob es sich um ein echtes PALplus-Signal mit Helpersignal handelt und ob die Quelle für das gesendete Signal eine elektronische Quelle wie eine Kamera oder ein Recorder oder ein Spielfilm ist. Diese Bits dienen dazu, je nach der empfangenen Signalart selbsttätig im Empfänger bestimmte Umschaltungen vorzunehmen. Das betrifft insbesondere die Anpassung der Ablenkung und Bildgeometrie an das jeweilige Bildsignal sowie die Umschaltung der Signalverarbeitungsstufen in Abhängigkeit davon, ob die Quelle für das Signal eine Kamera, ein Aufzeichnungsgerät mit Interlace oder ein üblicher 35 mm Spielfilm ist.

Der Erfindung liegt die Aufgabe zugrunde, für einen derartigen PALplus Fernsehempfänger ein neuartiges Anzeige-feature zu schaffen, das dem Bedienenden während des Betriebes nützliche Informationen über die jeweilige Sendung vermittelt.

Diese Aufgabe wird durch die im Anspruch 1 angegebene Erfindung gelöst. Vorteilhafte Weiterbildungen der Erfindung sind in den Unteransprüchen angegeben.

Bei der Erfindung ist somit an dem Empfänger ein sichtbares Anzeigemittel für den Empfang eines PALplus-Signales vorgesehen. Der Bedienende erhält eine Information, daß er in einem bestimmten Augenblick ein PALplus-Signal empfängt, also ein Signal mit Helpersignal, das zur Darstellung eines Bildes mit 575 Zeilen geeignet ist, oder zusätzlich eine Information darüber, daß die Quelle für das empfangene Signal keine elektronische Programmquelle, sondern ein Spielfilm ist.

Das Anzeigemittel wird vorzugsweise durch das in Zeile 23 übertragene sogenannten WSS (Wide Screen Signaling)-Bit gesteuert. Ein bereits ohnehin übertragenes Signal wird also zusätzlich zur Steuerung der genannten Anzeigemittel ausgenutzt.

Vorzugsweise wird das Anzeigemittel betätigt, wenn das WSS-Bit den Empfang des im PALplus-Signal enthaltenen Helpersignals anzeigt. Ein weiteres Anzeigemittel wird betätigt, wenn das WSS-Bit die Sendung eines Filmes anzeigt. Die Anzeigemittel für einen Film enthalten vorzugsweise das Symbol eines Kinofilms, einer Filmrolle oder einer teilweise abgewickelten Filmrolle.

Die Anzeigemittel können außerhalb des Bildschirms vorzugsweise an der Gehäusevorderseite des Fernsehempfängers angeordnet sein. Sie können auch durch eine vorübergehende Einblendung auf dem Bildschirm gebildet sein. Grundsätzlich können die Anzeigemittel eine optische Anzeige oder eine akustische Anzeige mit einem Spracherzeuger enthalten.

Vorzugsweise ist ein erstes Anzeigemittel für den Empfang eines PALplus-Signals und ein zweites Anzeigemittel für Ausstrahlung eines Filmes vorgesehen. Dabei ist jeweils einer optischen Anzeige, insbesondere in Form einer LED für eine bestimmte Art der Sendung, noch ein diese Art der Sendung andeutendes optisches Symbol in Form eines Logo zugeordnet. Vorzugsweise ist das Logo mit einer Lichtquelle versehen und leuchtet selbsttätig auf, wenn die jeweilige Empfangsart vorliegt.

Bei einer Weiterbildung der Erfindung wird jeweils bei Betätigung des Anzeigemittels selbsttätig eine vom Bedienenden für 4:3 Bildwiedergabe eingeschaltete Zoomfunktion abgeschaltet.

Die Erfindung ist insbesondere für einen PALplus Fernsehempfänger mit 16:9 Bildschirm anwendbar. Die Anwednung der Erfindung ist aber nicht auf ein derartigen Empfänger beschränkt. Die Erfindung kann auch in einem üblichen Fernsehempfänger mit 4:3 Bildschirm angewendet werden, der für eine echte PALplus-Wiedergabe nicht geeignet ist. Der Empfänger würde dann anzeigen, daß die Quelle für das empfangene Signal ein Film und keine elektronische Programmquelle wie eine Kamera oder ein Recorder ist.

Die Erfindung wird im folgenden anhand der Zeichnung erläutert. Darin zeigen
- Fig. 1: ein Blockschaltbild eines PALplus Fersehempfängers mit der erfindungsgemäßen Anzeige,
- Fig. 2: ein Blockschaltbild für die Steuerung der Anzeige und
- Fig. 3: eine spezielle Anzeige für den Empfang eines Filmes.

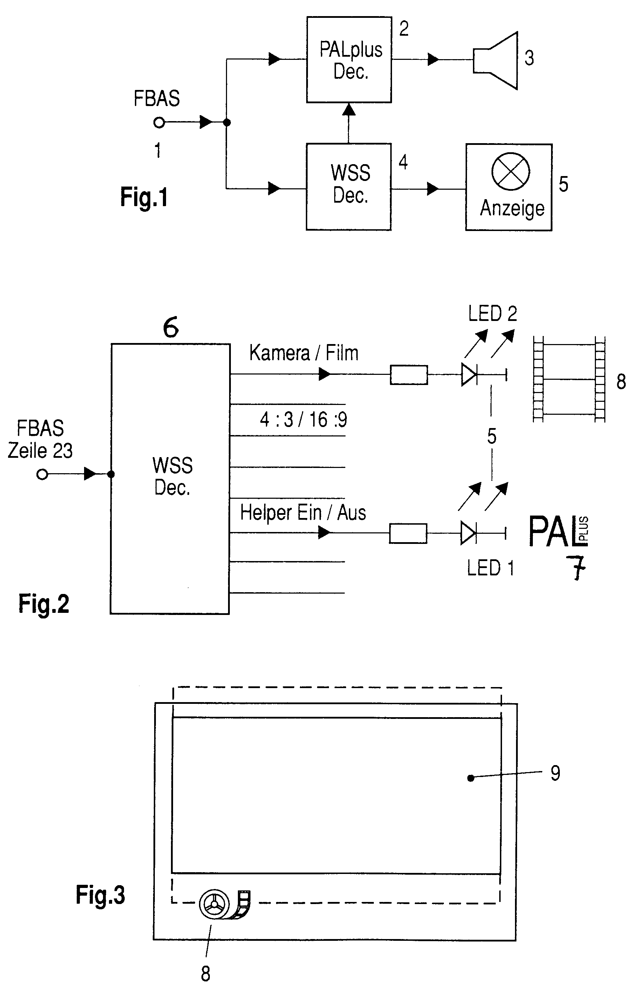

In Fig. 1 gelangt das FBAS-Signal von der Klemme 1 auf den PALplus-Decoder 2, der die Bildröhre 3 zur Darstellung eines Bildes steuert. Das Signal gelangt außerdem an den WSS-Decoder 4, der die Kennbits während der Zeile 23 auswertet und in Abhängigkeit davon die Funktion des PALplus-Decoders 2 steuert.

Zusätzlich sind bestimmte Ausgänge des WSS-Decoders 4 an die Anzeige 5 angeschlossen. Die Anzeige 5 zeigt insbesondere an, daß ein PALplus-Signal mit Helpersignal empfangen wird, und daß es sich um die Ausstrahlung eines Filmes handelt.

In Fig. 2 gelangt das FBAS-Signal der ersten Hälfte der Zeile 23 auf den WSS-Decoder 6. Dieser ezeugt eine Vielzahl von Statusfunktionsignalen, von denen drei dargestellt sind. Ein erstes Signal zeigt an, ob ein PALplus-Signal empfangen wird. Das Kriterium dafür ist die Anwesenheit des Helpersignals, das eine zwingende Voraussetzung für ein PALplus-Signal ist. Dieses Signal gelangt auf die Leuchtdiode LED1. LED1 wird zum Leuchten angeregt, wenn ein Helpersignal detektiert wird, also ein PALplus-Signal empfangen wird. Wenn das Helpersignal nicht empfangen wird, leuchtet LED1 nicht. Der Leuchtdiode LED1 ist noch ein PALplus-Symbol in Form eines Logo 7 zugeordnet, das vorzugsweise durch LED1 erleuchtet wird.

Ein zweites Signal zeigt an, ob die Quelle für das empfangene Signal eine elektronische Programmquelle, also insbesondere eine Kamera oder Aufzeichnungsgerät oder ein Film ist. Dieses Signal steuert die Leuchtdiode LED2. LED2 leuchtet nur dann, wenn die Quelle für das empfangene Signal ein Spielfilm ist. Der Leuchtdiode LED2 ist auch ein Symbol in Form des Logo 8 zugeordnet, das symbolisch einen Spielfilm darstellt.

Wenn somit das empfangene Signal ein PALplus-Signal ist und von einer Kamera kommt, leuchtet LED1, LED2 jedoch nicht. Wenn das empfangene Signal ein PALplus-Signal und die Quelle ein Spielfilm ist, leuchten LED1 und LED2 jeweils zusammen mit den Logos 7, 8. Wenn das empfangene Signal von einem Spielfilm stammt, aber kein PALplus-Signal ist, also das Helpersignal fehlt, leuchtet LED2, LED1 jedoch nicht.

Fig. 3 zeigt eine besondere Ausführungsform für einen PALplus-Fernsehempfänger mit einem 16:9 Bildschirm 9. Wenn der WSS-Decoder als Quelle für das Signal einen Spielfilm anzeigt, erscheint unterhalb des Bildschirms 9 das Symbol oder Logo 8 in Form einer teilweise abgewickelten Filmrolle. Der Bedienende kann dann erkennen, daß die Quelle für das gerade empfangene Signal ein Spielfilm ist. Sobald das Signal wieder von einer elektronischen Programmquelle kommt, z.B. eine aktuelle Sendung oder Nachrichten darstellt, erlischt das durch die Leuchtdiode LED2 erleuchtete Logo 8.

## Patentansprüche

1. Fernsehempfänger zum wahlweisen Empfang eines üblichen 4:3 Fernsehsignals oder eines 16:9 PALplus-Signals, **dadurch gekennzeichnet**, daß an dem Empfänger ein sichtbares Anzeigemittel (5) für den Empfang eines PALplus-Signals vorgesehen ist.

2. Fernsehempfänger nach Anspruch 1, **dadurch gekennzeichnet**, daß das Anzeigemittel (5) durch das in Zeile 23 übertragen WSS (Wide Screen Signaling)-Bit gesteuert ist.

3. Fernsehempfänger nach Anspruch 2, **dadurch gekennzeichnet**, daß das Anzeigemittel (5) betätigt wird, wenn das WSS-Bit den Empfang des im PALplus-Signal enthaltenen Helpersignals anzeigt.

4. Fernsehempfänger nach Anspruch 1, **dadurch gekennzeichnet,** daß das Anzeigemittel (5) betätigt wird, wenn das WSS-Bit die Ausstrahlung eines Films anzeigt.

5. Fernsehempfänger nach Anspruch 4, **dadurch gekennzeichnet**, daß das Anzeigemittel (5) das Symbol (8) eines Kinofilms, einer Filmrolle oder einer teilweise abgewickelten Filmrolle enthält.

6. Fernsehempfänger nach Anspruch 1, **dadurch gekennzeichnet**, daß das Anzeigemittel (5) außerhalb des Bildschirm an dem Empfängergehäuse angeordnet ist.

7. Fernsehempfänger nach Anspruch 1, **dadurch gekennzeichnet**, daß das Anzeigemittel (5) durch eine Einblendung auf dem Bildschirm gebildet ist.

8. Fernsehempfänger nach.Anspruch 1, **dadurch gekennzeichnet**, daß das Anzeigemittel (5) eine optische Anzeige ist.

9. Fernsehempfänger nach Anspruch 1, **dadurch gekennzeichnet**, daß Anzeigemittel (5) eine akustische Anzeige ist.

10. Fernsehempfänger nach Anspruch 1, **dadurch gekennzeichnet**, daß ein erstes Anzeigemittel (LED1) für den Empfang eines PALplus-Signals und ein zweites Anzeigemittel (LED2) für die Ausstrahlung eines Films vorgesehen ist.

11. Fernsehempfänger nach Anspruch 1, **dadurch gekennzeichnet**, daß jeweils einer optischen Anzeige (LED1, LED2) für eine bestimmte Art der Sendung ein diese Art der Sendunbg andeutendes optisches Symbol (7, 8) in Form eines Logo zugeordnet ist.

12. Fernsehempfänger nach Anspruch 1, **dadurch gekennzeichnet**, daß jeweils bei Betätigung des Anzeigemittels (5) selbsttätig eine vom Bedienenden für 4:3 Bildwiedergabe eingeschaltete Zoom-Funktion abgeschaltet wird.
